# EUROPEAN PATENT SPECIFICATION

(11) **EP 1 240 118 B1**
(45) Date of publication and mention of the grant of the patent: **23.04.2003**
(21) Application number: 00977812.7
(22) Date of filing: 06.12.2000
(51) Int. Cl.: C04B 41/87

(54) **ALUMINIUM-WETTABLE PROTECTIVE COATINGS FOR CARBON COMPONENTS USED IN METALLURGICAL PROCESSES**
ALUMINIUM-BENETZBARE SCHUTZSCHICHT FÜR KOHLENSTOFFBAUTEILE ANGEWENDET IN METALLURGISCHEN VERFAHREN
REVETEMENT DE PROTECTION D'ALUMINIUM MOUILLABLE POUR COMPOSANTS DE CARBONE UTILISES DANS DES PROCESSUS METALLURGIQUES

(30) Priority: 09.12.1999 WO PCT/IB99/01982; 25.10.2000 WO PCT/IB00/01551
(43) Date of publication of application: 18.09.2002
(73) Proprietor: MOLTECH Invent S.A., 2320 Luxembourg (LU)
(72) Inventor: DE NORA, Vittorio, Nassau (BS); DURUZ, Jean-Jacques, CH-1204 Geneva (CH)
(74) Representative: Cronin, Brian
(86) International application number: IB0001810
(87) International publication number: WO01042168

(56) References cited:
- WO-A-99/36594
- US-A- 4 650 552
- US-A- 5 310 476
- US-A- 5 409 589

## Description

### Field of the Invention

The invention relates to aluminium-wettable protective coatings for components used in processes for the production, purification or recycling of metals in a molten state during which the components are exposed to high temperature oxidising and/or corrosive environments, methods of manufacturing such components, apparatus for the production, purification or recycling of metals comprising such components and their use to produce, purify or recycle metals.

### Background of the Invention

The production, purification or recycling of metals, such as aluminium or steel, is usually carried out at high temperature in very aggressive environments, in particular in molten metal, molten electrolyte and/or corrosive gas. Therefore, the materials used for the manufacture of components exposed to such environments must be thermally and chemically stable.

WO97/05076 (Guillo/Hankin) discloses a refractory silica material which contains barium sulfate to reduce the corrodability and wettability by molten metals.

Graphite and other carbonaceous materials are commonly used for components, especially conductive components. Unfortunately, carbon components do not resist oxidation and/or corrosion and must be periodically replaced.

Several proposals have been made to reduce wear of carbon components in such technologies to achieve a higher operation efficiency, reduce pollution and the costs of operation.

In the field of steel recycling using arc electrode furnaces, it has been sought to reduce oxidation wear of inactive lateral faces of carbon arc electrodes, which is caused by exposure to oxygen at the high operating temperature. For instance, in US Patent 5,882,374 (Hendrix) it has been proposed to coat the inactive lateral face of the arc electrode with silica material to avoid consumption of the lateral face.

For the purification of molten metals, in particular molten aluminium, by the injection of a flux removing impurities towards the surface of the molten metal, it has been proposed to coat carbon components which are exposed to the molten metal with a coating of refractory material as disclosed in WO00/63630 (Holz/Duruz).

In aluminium production, some components are exposed to molten fluoride-containing electrolyte, molten aluminium and/or anodically produced oxygen. In conventional Hall-Héroult cells these components are still made of consumable carbonaceous materials.

However, it has been proposed to replace consumable non-carbon anodes with inert anodes. US Patent 5,720,860 (Sekhar/Zhang) for example proposed the use of colloidal cerium acetate to produce anode bodies by a micropyretic reaction of a powder mixture of nickel, aluminium and copper. WO99/36593 (de Nora/Duruz) discloses slurry-applied metal oxide coatings used for aluminium electrowinning non-carbon anodes. The slurry is applied from a metal oxide or its precursor in a colloidal and/or polymeric carrier.

It has long been recognised that it would be desirable to make (or coat or cover) the cathode of an aluminium electrowinning cell with a refractory boride such as titanium diboride that would render the cathode surface wettable to molten aluminium which in turn would lead to a series of advantages. Many difficulties were encountered in producing refractory boride coatings which meet up to the rigorous conditions in an aluminium electrowinning cell. However, as described in the following patents, such coatings have recently been successfully introduced.

US Patents 5,310,476, 5,364,513 (both in the name of Sekhar/de Nora), US 5,409,589 (Sekhar) and 5,651,874 (de Nora/Sekhar) all disclose applying a protective coating of a refractory material such as titanium diboride to a carbon component of an aluminium electrowinning cell, by applying thereto a slurry of particulate refractory material and/or precursors thereof in a colloid in several layers with drying between each layer.

These coatings with preformed refractory material have shown outstanding performance compared to previous attempts to apply refractory coatings to components of aluminium electrowinning cells. These aluminium-wettable refractory boride coated bodies can be used in conventional cells with a deep aluminium pool and also permit the elimination of the thick aluminium pool required to partially protect the carbon cathode, enabling the cell to operate with a drained cathode.

These refractory boride coated bodies have the following attributes: excellent wettability by molten aluminium, inertness to attack by molten aluminium and cryolite, low cost, environmentally safe, ability to absorb thermal and mechanical shocks, durability in the environment of an aluminium production cell, and ease of production and processing. The boride coating also acts as a barrier to sodium penetration.

During the start-up of aluminium electrowinning cells provided with cathodes having such aluminium-wettable refractory boride coatings, the coatings should be protected against oxidation and/or corrosion until the they are covered with molten aluminium.

WO98/17843 (de Nora/Sekhar/Duruz/Liu) discloses a method of starting up a cell which comprises a carbon cathode which can be coated with an aluminium-wettable refractory boride coating. During start-up the cathode is covered with temporary layers of protective materials. The layers applied to the cathode include inter-alia layers obtained from a slurry of particulate metal, such as aluminium, nickel, iron, titanium, cobalt, chromium, zirconium or copper, in a colloidal carrier or in a polymer.

US Patent 5,981,081 (Sue) discloses wear and corrosion resistant coatings made of transition metal boride particles dispersed in a matrix of nickel, cobalt or iron. The coatings are applied by explosion or plasma spraying a mixture of powders of a transition metal boride and a boron containing alloy on a metal substrate and heat treating.

### Objects of the Invention

An object of the invention is to provide an aluminium-wettable protective coating on a component, in particular made of carbon or another oxidisable or corrodable and/or wear-exposed material, for use at elevated temperature in oxidising and/or corrosive metallurgical environments, in particular in the production, purification or recycling of metals, to achieve improved protection.

Another object of the invention is to provide an apparatus for the production, purification or recycling of metals in a molten state, provided with components coated with coatings that maintain their protective and wettability properties even when exposed to highly oxidising and/or corrosive environments.

Yet a further object of the invention is to provide a method of operating an apparatus for the production, purification or recycling of metals in a molten state provided with coated components which maintain their protective and wettability properties even when exposed to highly oxidising and/or corrosive environments.

### Summary of the Invention

A first aspect of the invention relates to an aluminium-wettable protective coating on a substrate, in particular made of carbon material, for use at elevated temperature in an oxidising and/or corrosive gaseous and/or molten environment. The coating is applied to protect the substrate from liquid and/or gaseous attack. The coating comprises particles of at least one metal oxide and/or at least one partly oxidised metal in a dried and/or cured colloidal carrier and/or organic binder. The metal oxide and/or partly oxidised metal is reactable with molten aluminium so that the particles react with aluminium when exposed thereto to form an alumina matrix containing metal of said particles and aluminium.

Usually, the particles of said at least one partly oxidised metal contain at least 10 atomic% of the metal(s) as oxide(s), typically 20 to 30 atomic% or more.

The reaction of the metal oxide and/or partly oxidised metal with molten aluminium involves the reduction of the metal oxide and/or partly oxidised metal and the oxidation of aluminium. For the metal oxide and/or partly oxidised metal to be reducible by molten aluminium, it is necessary that such a metal be substantially more electronegative than aluminium.

The particles may be non-dispersed but suspended or suspendable in the colloidal carrier and/or organic binder. The metal(s) of the particles can selected from manganese, iron, cobalt, nickel, copper, zinc, niobium, molybdenum and tantalum.

The coating may comprise a dried colloidal carrier selected from colloidal alumina, silica, yttria, ceria, thoria, zirconia, magnesia, lithia, monoaluminium phosphate and cerium acetate and combinations thereof. The coating can alternatively or additionally contain a cured organic binder selected from polyurethane, ethylene glycol, polyethylene glycol, resins, esters or waxes.

Upon drying and/or curing the aluminium-wettable coating can be heat-treated before exposure to molten aluminium. However, the heat treatment can be carried out solely by exposure to molten aluminium.

Compared to known refractory boride coatings, it has been observed that the coatings according to the invention are better wettable by molten metal and are less likely to be impaired when exposed to highly oxidising and/or corrosive environments, for example during start-up procedures of aluminium electrowinning cells. The improved wettability comes initially from the oxide particles which can react with the molten aluminium and consequently draw molten aluminium into the coating. The oxide protection on the metal particles improves their resistance against oxidation during start-up. Hence, cell components protected with such a coating remain aluminium-wettable even if the start-up procedure is not carried out under optimal conditions.

Refractory boride coatings of cathodes used in aluminium electrowinning cells require strict cell start-up conditions to avoid detrimental alteration of the coatings. During start-up such refractory boride coatings need to be properly protected against oxidation, for example as disclosed in WO98/17843 (de Nora/Sekhar/Duruz/Liu), otherwise they lose their capacity to be wetted by aluminium.

However, for certain applications, it may be advantageous to combine an aluminium-wettable coating according to the present invention with known refractory boride coatings, for instance as disclosed in US Patents 5,364,513 (Sekhar/ de Nora) and 5,651,874 (de Nora/Sekhar) or in PCT/IB00/01551 (Nguyen/Duruz/de Nora). Indeed, the aluminium wettability of the coating according to the present invention can be such that molten aluminium infiltrates the coating down to the substrate. To avoid contact between molten aluminium and the substrate, one or more sub-layers of conventional boride coatings, which are inert and impervious to molten aluminium, can be used to separate a coating according to the invention from the substrate. For example a thin layer, e.g. 0.5 to 2 mm thick, of refractory boride material, as disclosed in 5,651,874 (de Nora/Sekhar), can be used as a sub-layer under a thicker aluminium-wettable coating according to the invention, e.g. 3 to 8 mm thick.

Furthermore, the long term mechanical resistance and wettability of the protective coatings according to the invention can be improved by adding a refractory hard metal boride, such as titanium diboride and/or zirconium diboride. For instance, the particles may be made of a core of a refractory hard metal boride covered with a metal oxide or partly oxidised metal. The coating may also contain a mixture of metal oxide particles and/or partly oxidised metal particles with particles of refractory hard metal boride. The metal oxide and/or partly oxidised metal thus combined with the refractory hard metal boride may include at least one of copper, nickel and iron as an oxide or partly oxidised metal.

A coating according to the invention with refractory hard metal boride particles in a dried colloidal carrier that consists of dried colloidal metal oxide, preferably comprises particles of the refractory hard metal boride covered with mixed oxides of metal derived from the refractory hard metal boride and metal derived from the dried colloidal metal oxide. Moreover, the slurry-applied aluminium-wettable coating can be obtained from a slurry comprising metal oxide particles that combine upon heat treatment with dried colloidal metal oxide to form mixed oxides which are miscible with said mixed oxides covering the particles of said refractory hard metal boride, as disclosed in PCT/IB00/01551 (Nguyen/Duruz/de Nora).

Optionally, the coating may contain carbon powder which is mixed to the colloid and/or inorganic binder before application of the coating.

Thick or thin coatings may be applied to the substrate, e.g. having a thickness of 0.1 to 5 mm, typically 0.3 to 3 mm.

In one embodiment, the coating is made of a plurality of layers of different compositions. For example, one or more long-lasting aluminium-wettable layers comprising a mixture of boride particles and particles of the metal oxide and/or partly oxidised metal reactable with molten aluminium underlie one or more highly aluminium-wettable layers made of the reactable particles of metal oxide and/or partly oxidised metal in the dried and/or cured colloidal carrier and/or organic binder. As mentioned above, the coating may comprise one or more boride-based sub-layers serving as anchorage layers on the substrate, the sub-layers being inert and impervious to molten aluminium.

The invention relates also to an aluminium-wetted protective coating on a substrate obtainable by exposing an aluminium-wettable coating as described above to molten aluminium. The wetted coating an alumina matrix contains metal of the reactable metal oxide and/or partly oxidised metal particles and aluminium.

The aluminium-wettable coating may be used as such in an aluminium electrowinning cell or in any apparatus in which during use the coating is exposed to molten aluminium, e.g. an aluminium purification apparatus. During initial use, the aluminium-wettable coating is wetted by molten aluminium so that the metal oxide particles and/or partly oxidised metal particles of the coating react with the molten aluminium to give the final aluminium-wetted coating described above.

For applications in which the coating does not (sufficiently) contact molten aluminium, the precursor coating should be exposed to molten aluminium before use so that the reaction between the metal oxide particles and/or partly oxidised metal particles and aluminium takes place before use.

Another aspect of the invention is a method of forming an aluminium-wettable protective coating on a substrate as described above. The method comprises applying particles of at least one metal oxide and/or at least one partly oxidised metal in a colloidal carrier and/or organic binder onto the substrate as one or more layers, drying and/or curing the applied layer(s).

Yet another aspect of the invention is a method of forming an aluminium-wetted protective coating on a substrate comprising exposing the coating as described above to molten aluminium so that the particles of at least one metal oxide and/or at least one partly oxidised metal react with aluminium to form an alumina matrix containing metal of the particles and aluminium.

A further aspect of the invention is an apparatus for the production, purification or recycling of a metal in a molten state. This apparatus comprises at least one component having a substrate, in particular a carbon substrate, coated with an aluminium-wettable protective coating as described above. In particular when the component is not for use in molten aluminium, the component is preferably wetted by molten aluminium before use. During use, such a component is exposed to an oxidising and/or corrosive gaseous and/or molten environment at elevated temperature and is protected from liquid and/or gaseous attack by the aluminium-wettable protective coating.

The apparatus may be an aluminium electrowinning cell, in which case the coated component is a cell component. The cell component can be part of a cell bottom coated with said aluminium-wettable protective coating protecting the cell bottom component from molten aluminium and/or molten electrolyte. The cell component may also be a cathode having an aluminium-wettable surface, in particular a drained surface, formed by an upper surface of the aluminium-wettable protective coating protecting the cathode from molten aluminium and/or molten electrolyte. Alternatively, the cell component is an anode having one or more electrochemically inactive surfaces coated with the aluminium-wettable protective coating protecting the inactive surface from molten electrolyte and/or anodically produced gas. Another cell component is a cell sidewall coated with the aluminium-wettable protective coating protecting the sidewall from molten electrolyte, molten aluminium and/or anodically produced gas.

The apparatus can also be an arc furnace for the recycling of steel, the coated component being an arc-electrode or an arc-electrode holder with the aluminium-wettable protective coating protecting it from oxidising gas and/or molten steel.

Another embodiment is an apparatus for the purification of a molten metal, such as aluminium, magnesium, cast iron or steel, by the injection of a purifying fluid into the molten metal to remove impurities towards the surface thereof. The coated component may be a rotatable stirrer or a vessel for containing molten metal to be purified with the aluminium-wettable protective coating protecting it from the molten metal to be purified, the purifying fluid and/or impurities of the molten metal by the aluminium-wettable protective coating.

Yet another aspect of the invention relates to a method of producing, purifying or recycling a metal in an apparatus as described above and comprising at least one component coated with the aluminium-wettable protective coating. The method comprises exposing said coated component to an oxidising and/or corrosive gaseous and/or molten environment at elevated temperature. The product of the method may be primary aluminium, recycled steel, or a purified metal such as purified aluminium, magnesium, iron or steel.

### Brief Description of the Drawings

Embodiments of the invention will now be described by way of example with reference to the accompanying schematic drawings, wherein:
- Figure 1 shows a schematic cross-sectional view of an aluminium production cell with carbonaceous drained cathodes having an aluminium-wettable protective coating in accordance with the invention;
- Figure 2 schematically shows an arc electrode furnace incorporating protective coatings according to the invention;
- Figure 3 shows an apparatus for the purification of a molten metal having a carbonaceous stirrer protected with an aluminium-wettable protective coating according to the invention;
- Figure 3a is an enlarged schematic sectional view of part of the stirrer shown in Figure 3; and
- Figure 4 schematically shows a variation of the stirrer shown in Figure 3.

### Detailed Description

### Aluminium Electrowinning Cell :

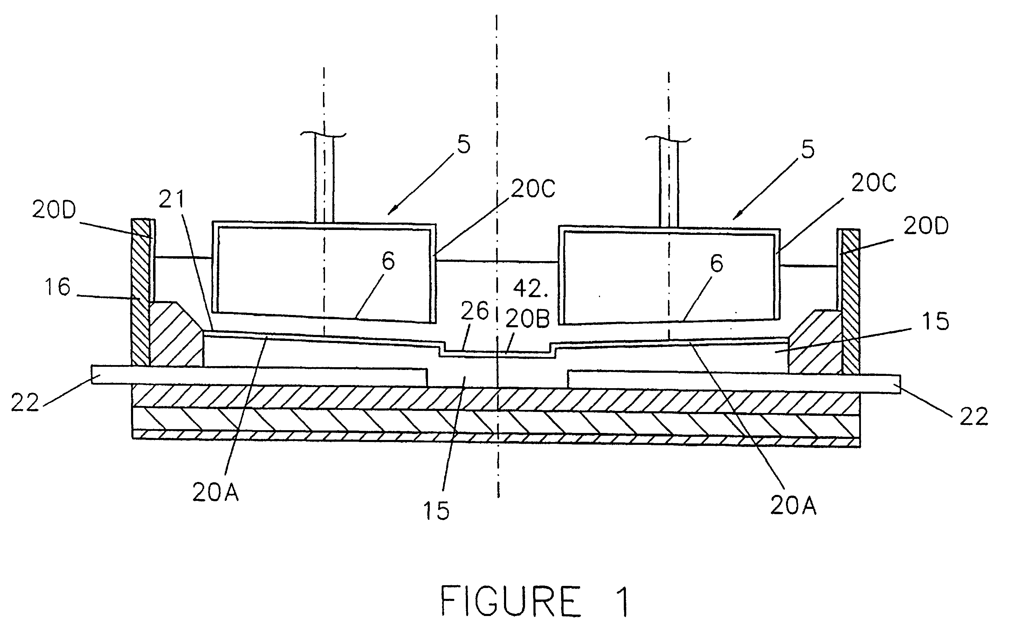

Figure 1 shows an aluminium electrowinning cell comprising a series of carbonaceous anode blocks 5 having operative surfaces 6 suspended over drained sloping flattened generally V-shaped cathode surface 21 in a fluoride-containing molten electrolyte 42 containing dissolved alumina.

The drained cathode surface 21 is formed by the surface of an aluminium-wettable protective coating 20A applied to the upper surfaces of a series of juxtaposed carbon cathode blocks 15 extending in pairs arranged end-to-end across the cell. The aluminium-wettable protective coating 20A is deposited from metal oxide particles and/or partly oxidised metal particles in a colloidal carrier and/or organic binder according the invention, for instance as embodied in Examples 1 to 3.

The cathode blocks 15 comprise, embedded in recesses located in their bottom surfaces, current supply bars 22 of steel or other conductive material for connection to an external electric current supply.

The drained cathode surface 21 is divided by a central aluminium collection groove 26 located between pairs of cathode blocks 15 arranged end-to-end across the cell. The aluminium collection groove 26 is situated at the bottom of the drained cathode surface 21 and is arranged to collect the product aluminium draining from the cathode surface 21. The aluminium collection groove 26 is coated with an aluminium-wettable protective coating 20B according to the invention.

The anode blocks 5 too are coated with an aluminium-wettable refractory protective coating 20C on their inactive surfaces, but not on the operative anode surfaces 6 which are immersed as such in the molten electrolyte 42.

The cell comprises carbonaceous sidewalls 16 exposed to molten electrolyte and to the environment above the molten electrolyte, but protected against the molten electrolyte 42 and the environment above the molten electrolyte with an aluminium-wettable protective coating 20D according to the invention.

The method of application of the aluminium wettable coatings 20A,20B,20C,20D comprises applying to the surface of the component a slurry of metal oxide particles and/or partly oxidised metal particles in a colloidal carrier and/or organic binder as specified above, followed by drying. The cathode coating 20A and the collection groove coating 20B can be heat treated before or after installation in the aluminium production cell, and the reaction of the coating with molten aluminium can be done before or during use. However, the anode coating 20C and the sidewall coating 20D should be heat treated and reacted with molten aluminium before use in the cell since these components do not contact molten aluminium during use.

The method of coating the components 5,15,16 of the present invention by application of the slurry involves painting (by brush or roller), dipping, spraying, or pouring the slurry onto the components 5,15,16 and allowing to dry before another layer is added. The coating 20A,20B,20C,20D does not need to be entirely dry before the application of the next layer. It is preferred to heat at least the final coating 20A,20B,20C,20D with a suitable heat source so as to completely dry it and improve densification. Heating and drying take place preferably at about 80-200°C, usually for half an hour to several hours, and further heat treatments are possible.

The surfaces of the carbon components 5,15,16 to be coated with this slurry may be treated by sand blasting or pickled with acids or fluxes such as cryolite or other combinations of fluorides and chlorides prior to the application of the coating 20A,20B,20C,20D. Similarly the surfaces may be cleaned with an organic solvent such as acetone to remove oily products and other debris prior to coating. These treatments will enhance the bonding of the coatings to the component.

Before or after application of the coating 20A,20B,20C,20D and before use, the surfaces of the components 5,15,16 can be painted, sprayed, dipped or infiltrated with reagents and precursors, gels and/or colloids.

In operation of the cell illustrated in Figure 1, alumina dissolved in the molten electrolyte 42 at a temperature of 750° to 960°C is electrolysed between the anodes 5 and the cathode blocks 15 to produce gas on the operative anodes surfaces 6 and molten aluminium on the aluminium-wettable drained cathode coating 20A.

The cathodically-produced molten aluminium flows down the inclined drained cathode surface 21 into the aluminium collection grooves 26 onto the aluminium-wettable protective coating 20B from where it flows into an aluminium collection reservoir for subsequent tapping.

Figure 1 shows a specific aluminium electrowinning cell by way of example. It is evident that many alternatives, modifications, and variations will be apparent to those skilled in the art. For instance, the cell may have one or more aluminium collection reservoirs across the cell, each intersecting the aluminium collection groove to divide the drained cathode surface into four quadrants as described in PCT/IB99/00698 (de Nora). The anodes may be made of inert materials and have an electrochemically active structure of grid-like design to permit electrolyte circulation, as for example disclosed in PCT/IB99/01739 (de Nora/Duruz).

### Arc Furnace:

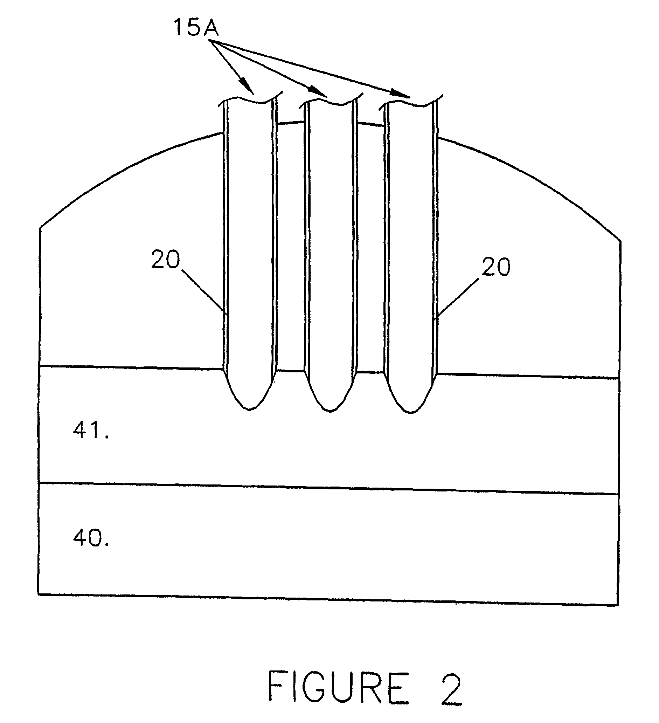

The arc furnace shown in Figure 2 comprises three consumable electrodes 15A arranged in a triangular relationship. For clarity, the distance between the electrodes 15A as shown in Figure 2 has been proportionally increased with respect to the furnace. Typically, the electrodes 15A have a diameter between 200 and 500 mm and can be spaced by a distance corresponding to about their diameter.

The electrodes 15A are connected to an electrical power supply (not shown) and suspended from an electrode positioning system above the cell which is arranged to adjust their height.

The consumable electrodes 15A are made of a carbon substrate laterally coated with an aluminium-wettable protective coating 20 protecting the carbon substrate from oxidising gas. According to the invention, the coating is deposited from particles of at least one metal oxide and/or at least one partly oxidised metal in a colloidal carrier and/or organic binder applied onto the carbon substrate as one or more layers which are dried and/or cured and then exposed to molten aluminium so that the particles react with aluminium to form an alumina matrix containing metal of the particles and aluminium.

The method of application of the coating 20 is similar to the method described in relation to the cathode blocks 15 described above.

The bottom of electrodes 15A which is consumed during operation and constitutes the electrodes' operative surface is uncoated. The coating 20 protects only the electrodes' lateral faces against premature oxidation.

The electrodes 15A dip in an iron source 41, usually containing iron oxide or oxidised iron, such as scrap iron, scrap steel and pig iron. Preferably, the iron source 41 further comprises reductants selected from gaseous hydrogen, gaseous carbon monoxide or solid carbon bearing reductants. The reductants may also comprise non-iron minerals known as gangue which include silica, alumina, magnesia and lime.

The iron source 41 floats on a pool of liquid iron or steel 40 resulting from the recycling of the iron source 41.

During use, a three phase AC current is passed through electrodes 15A, which directly reduces iron from the iron source 41. The reduced iron is then collected in the iron or steel pool 40. The gangue contained in the reduced iron is separated from the iron by melting and flotation forming a slag (not shown) which is removed, for example through one or more apertures (not shown) located on sidewalls of the arc furnace at the level of the slag.

The pool of iron or steel 40 is periodically or continuously tapped for instance through an aperture (not shown) located in the bottom of the arc furnace.

### Molten Metal Purification Apparatus :

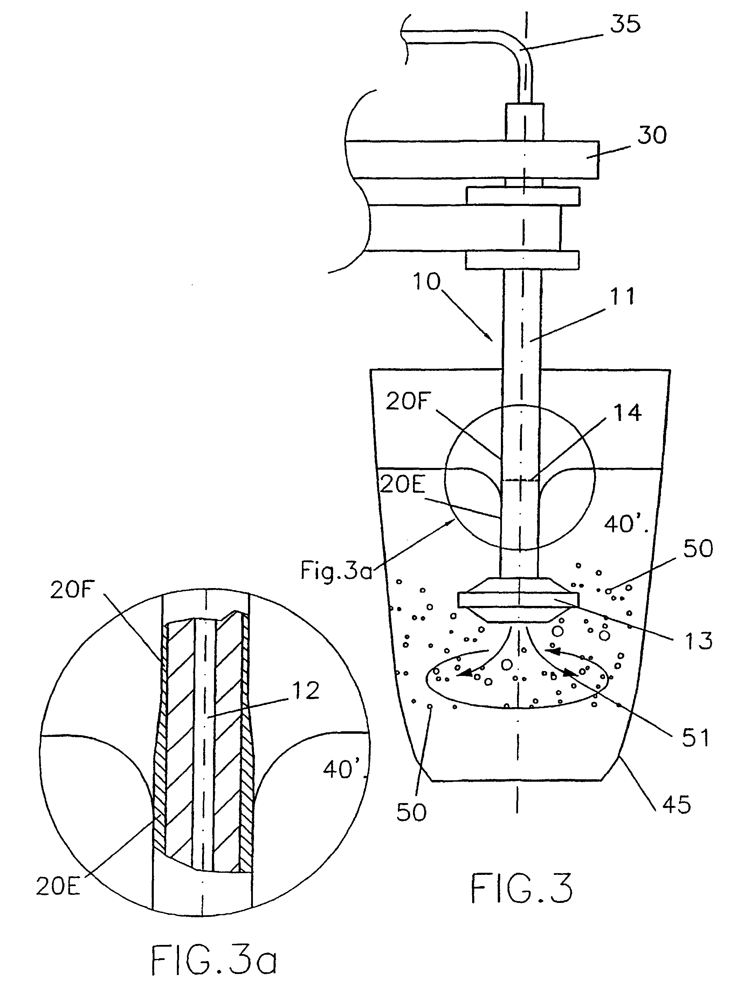

The molten metal purification apparatus partly shown in Figure 3 comprises a vessel 45 containing molten metal 40', such as molten aluminium, to be purified. A rotatable stirrer 10 made of carbon-based material, such as graphite, is partly immersed in the molten metal 40' and is arranged to rotate therein.

The stirrer 10 comprises a shaft 11 whose upper part is engaged with a rotary drive and support structure 30 which holds and rotates the stirrer 10. The lower part of shaft 11 is carbon-based and dips in the molten metal 40' contained in vessel 45. At the lower end of the shaft 11 is a rotor 13 provided with flanges or other protuberances for stirring the molten metal 40'.

Inside the shaft 11, along its length, is an axial duct 12, as shown in Figure 3a, which is connected at the stirrer's upper end through a flexible tube 35 to a gas supply (not shown), for instance a gas reservoir provided with a gas gate leading to the flexible tube 35.

The axial duct 12 is arranged to supply a fluid to the rotor 13. The rotor 13 comprises a plurality of apertures connected to the internal duct 12 for injecting the gas into the molten metal 40', as shown by arrows 51.

The lower part of the shaft 11, i.e. the immersed part and the interface region at or about the meltline 14 of the shaft, as well as the rotor 13 are coated with a protective coating 20E deposited from metal oxide particles and/or partly oxidised metal particles in a colloidal carrier and/or organic binder according to the invention which improves the resistance to erosion, oxidation and/or corrosion of the stirrer during operation.

As shown in Figure 3, the upper part of shaft 11 is also protected with a protective coating 20F, against oxidation and/or corrosion. The upper part of the carbon-based shaft 11 is coated with a thin coating of refractory material 20F providing protection against oxidation and corrosion, whereas the coating 20E protecting the immersed part of the shaft 11 and the rotor 13 is a thicker coating of refractory material providing protection against erosion, oxidation and corrosion.

Likewise, surfaces of the vessel 45 which come into contact with the molten metal may be protected with an aluminium-wettable protective coating according to the invention.

The method of application of the coating 20E,20F is similar to the method described in relation to the cathode blocks 15 described above.

During operation of the apparatus shown in Figure 3, a reactive or non-reactive fluid, in particular a gas 50 alone or a flux, such as a halide, nitrogen and/or argon, is injected into the molten metal 40' contained in the vessel 45 through the flexible tube 35 and stirrer 10 which dips in the molten metal 40'.

The stirrer 10 is rotated at a speed of about 100 to 500 RPM so that the injected gas 50 is dispersed throughout the molten metal in finely divided gas bubbles. The dispersed gas bubbles 50, with or without reaction, remove impurities present in the molten metal 40' towards its surface, from where the impurities may be separated thus purifying the molten metal.

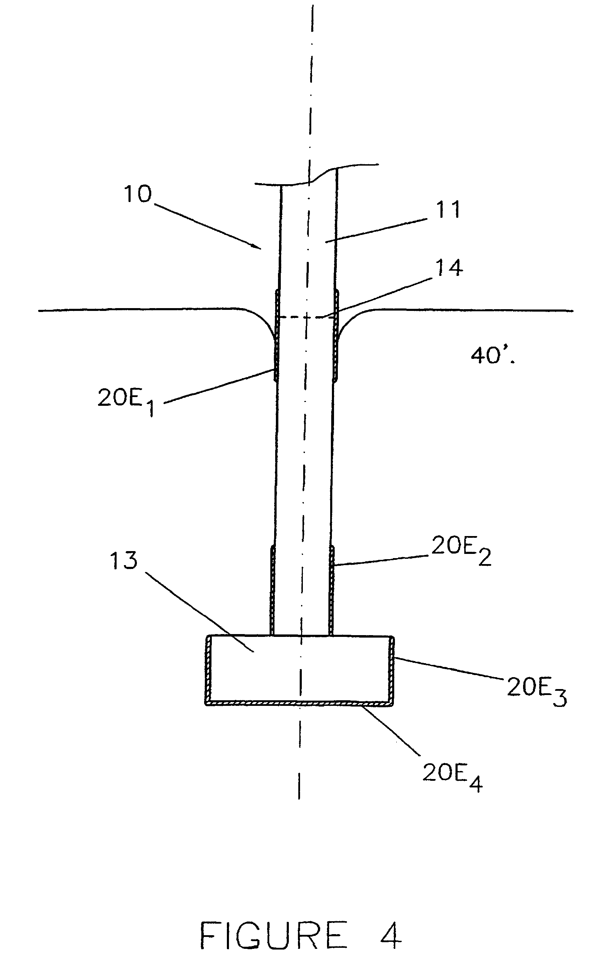

The stirrer 10 schematically shown in Figure 4 dips in a molten metal bath 40' and comprises a shaft 11 and a rotor 13. The stirrer 10 may be of any type, for example similar to the stirrer shown in Figure 3 or of conventional design as known from the prior art. The rotor 13 of stirrer 10 may be a high-shear rotor or a pump action rotor.

In Figure 4, instead of coating the entire shaft 11 and rotor 13, parts of the stirrer 10 liable to erosion are selectively coated with an aluminium-wettable protective coating according to the invention.

The interface portion at and about the meltline 14 of the carbon-based lower part of the shaft 11 is coated with a refractory interface coating 20E₁, for instance over a length of up to half that of the shaft 11. Excellent results have been obtained with a coating over a third of shaft 11. However, the length of coating 20E₁ could be a quarter of the length of shaft 11 or even less, depending on the design of stirrer 10 and the operating conditions.

In addition to the interface portion of such stirrers, other areas may be liable to erode, again depending on the design and operating conditions of the stirrers. The schematically shown stirrer 10 in Figure 4 illustrates further coated surfaces which are particularly exposed to erosion. The lower end of the shaft 11 adjacent to the rotor 13 is protected with a coating 20E₂, the lateral surface of rotor 13 is protected with a coating 20E₃ and the bottom surface of the rotor 13 is coated with a coating 20E₄.

For each specific stirrer design, the coating or different protective coatings on different parts of the stirrer, such as coatings 20E₁, 20E₂, 20E₃ and 20E₄ shown in Figure 4, may be adapted as a function of the expected lifetime of the stirrer. For optimal use, the amount and location of such coatings can be so balanced that they each have approximately the same lifetime.

In an alternative embodiment (not shown), the coating on such stirrers may be continuous as illustrated in Figure 3 but with a graded thickness or composition so as to adapt the resistance against erosion to the intensity of wear of each part of the stirrer, thereby combining the advantages of the different coatings shown in Figure 4.

Various modifications can be made to the apparatus shown in Figures 3, 3a and 4. For instance, the shaft shown in Figure 3 may be modified so as to consist of an assembly whose non-immersed part is made of a material other than carbon-based, such as a metal and/or a ceramic, which is resistant to oxidation and corrosion and which, therefore, does not need any protective coating, whereas the immersed part of the shaft is made of carbon-based material protected with a protective coating according to the invention. Such a composite shaft would preferably be designed to permit disassembly of the immersed and non-immersed parts so the immersed part can be replaced when worn.

Likewise, a carbon-based non-immersed part of the shaft may be protected from oxidation and corrosion with a coating and/or impregnation of a phosphate of aluminium, in particular applied in the form of a compound selected from monoaluminium phosphate, aluminium phosphate, aluminium polyphosphate, aluminium metaphosphate, and mixtures thereof as disclosed in US Patent 5,534,119 (Sekhar). It is also possible to protect the non-immersed part of the shaft with a coating and/or impregnation of a boron compound, such as a compound selected from boron oxide, boric acid and tetraboric acid as disclosed in US Patent 5,486,278 (Manganiello/Duruz/Bello) and in co-pending application WO97/26626 (de Nora/Duruz/Berclaz).

In a modification, the protective coating of the invention may simply be applied to any part of the stirrer in contact with the molten metal, to be protected against erosion, oxidation and/or corrosion during operation.

The invention will be further described in the following examples.

### Example 1

### Particle Encapsulation:

A particulate consisting of titanium diboride particles encapsulated in partly oxidised copper was prepared as follows:

An amount of 100 g of TiB₂ powder having a particle size of less than 15 micrometer and a surface area of about 0.2 m²/g was added to 300 ml of an etching solution containing 30 vol.% concentrated HCl and 70 vol.% deionised water and mixed in a beaker at room temperature with a magnetic stirrer. After 15 minutes of vigorous stirring, the TiB₂ powder was fully dispersed in the etching solution which had become a violet dispersion.

An amount of 40 g CuSO₄.5 H₂O solid was added to the dispersion (the amount corresponding to about 8.5 g Cu per 100 g of TiB₂) followed by vigorous stirring for 15 minutes. The temperature of the mixture increased to about 50°C and the violet colour of the dispersion became more intense.

The dispersion was filtered to separate the powder from the solution. The powder was then washed several times with deionised water until a pH of 4.5 was reached in the filtrate. Finally the powder was dried in air at 50 to 60°C.

Analysis of the powder showed that it consisted of TiB₂ particles encapsulated in partly oxidised copper with a copper content of about 9.8 weight% which corresponds to an average copper coating thickness of 0.06 micrometer on the TiB₂ particles. About 20 atomic% of the copper was in oxide form.

### Coating:

A coating on a carbon substrate was prepared from a slurry of the partly oxidised copper-encapsulated titanium diboride particles as follows:

The slurry was obtained by mixing 125 g of the partly oxidised copper-encapsulated titanium diboride particles with 52 ml of colloidal alumina which consisted of 28 ml Nyacol® (A1-20, a milky liquid with a colloidal particle size grade of about 40 to 60 nanometer) and 24 ml Condea® (CONDEA® 10/2 Sol, a clear, opalescent liquid with a colloidal particle size grade of about 10 to 30 nanometer).

Using a multigrade colloidal carrier such as a mixture of Nyacol® and Condea®, provides a combination of properties, namely better homogeneity/bonding without cracking and enhanced protection against sodium penetration when the coating or body is used as a component in an aluminium production cell. Moreover, the slurry with this mixed colloidal carrier has improved thixotropic properties, in particular it remains in suspension much longer than standard colloids, which leads to significant cost savings.

A coating having a thickness of 2.5 mm was formed on a carbon substrate by successively painting and drying at room temperature 10 layers of this slurry on the substrate.

To aluminise the coating, the substrate was placed in an alumina crucible and covered with a sheet of aluminium having a thickness of 3 to 5 cm. The crucible was then heat treated in a furnace at 970°C in air for 10 hours.

After cooling, a cross-section of the coated substrate was subjected to microscopic examination. The coating showed a good penetration of aluminium metal. Aluminium had reacted with the oxygen from the partly oxidised copper of the encapsulation to form an alumina matrix and the remaining metallic copper was alloyed to the aluminium which had infiltrated the coating providing an excellent aluminium-wettability at high temperature.

Such a coating is particularly suitable for cathodes or the cell bottom of an aluminium electrowinning cells, as well as for use in an apparatus for the purification of a molten metal, in particular molten aluminium, as described above.

Compared to known refractory boride coatings, for instance as disclosed in US Patent No. 5,651,874 (de Nora/Sekhar), the partly oxidised copper encapsulating the titanium diboride particles improved the wettability of the present coating. Furthermore, when subjected to an oxidising environment, the present coating still remains aluminium-wettable in contrast to known refractory boride coatings.

### Example 2

A coating from a slurry of partly oxidised particulate copper in a colloid was prepared as follows:

The slurry was obtained by mixing 300 g of partly oxidised particulate copper having a particle size of less than 10 micrometer with 52 ml colloidal alumina which consisted of 28 ml Nyacol® (a milky liquid with a colloidal particle size of about 40 to 60 nanometer) and 24 ml Condea® (a clear, opalescent liquid with a colloidal particle size of about 10 to 30 nanometer).

A coating having a thickness of 1.5 mm was formed on a carbon substrate by successively painting and drying at room temperature three layers of this slurry on the substrate.

To aluminise the coating, the substrate was placed in an alumina crucible and covered with a sheet of aluminium having a thickness of 3 to 5 cm. The crucible was then heat treated in a furnace and at 970°C in air for 10 hours.

The dimensions of the coating on the substrate had remained substantially unchanged after cooling. A microscopic examination of a cross-section of the coating showed a continuous matrix of alumina filled with aluminium and 2-3 atomic% copper in the form of copper-rich copper-aluminium alloy particles uniformly dispersed in the aluminium. This makes use of the aluminium-wettable protective coating according to the invention particularly advantageous for cell start-up.

### Example 3

A coating from a slurry of particulate iron in a colloid was prepared as follows:

The slurry was obtained by mixing 260 g of partly oxidised iron particles having a particle size of less than 10 micrometer with 28 ml colloidal alumina such as Condea®.

A coating having a thickness of 1.5 mm was formed on a carbon substrate by successively painting and drying at room temperature three layers of this slurry on the substrate.

The coating was aluminised and heat-treated as described in Examples 1 and 2.

The final coating had a metallic aspect and its surface was clearly defined under the above aluminium mass originating from the aluminisation treatment.

A microscopic examination of a cross-section of the coating showed a continuous matrix of alumina filled with aluminium and less than 1 atomic% iron in the form of iron-aluminium alloy particles uniformly dispersed in the aluminium, the iron-aluminium alloy particles containing 35 to 50 atomic% aluminium.

As a variation, part or all of the iron particles may be replaced with a corresponding amount of nickel particulate or with a nickel-iron alloy particulate of similar particle size.

### Example 4

A slurry free of any metal oxide and/or partly oxidised metal reactable with molten aluminium for use as an anchorage layer for a coating according to the invention was prepared by suspending a refractory hard metal boride consisting of 47.5 g surface-oxidised particulate spherical TiB₂ (-325 mesh (<42 micrometer)) having a TiO₂ surface film and a metal oxide in the form of 2.5 g TiO₂ (-325 mesh (<42 micrometer)) in a colloidal carrier consisting of 20 ml colloidal Al₂O₃ (NYACOL® Al-20, a milky liquid with a colloidal particle size of about 40 to 60 nanometer) and 1 ml PEG (polyethylene glycol) which increases the viscosity of the slurry and enhances its capacity to be applied by painting as well as the adherence and coherence of the final coating.

This slurry produces upon heat treatment an oxide matrix of titanium-aluminium mixed oxide from the reaction of the colloidal oxide Al₂O₃ and TiO₂ present as suspended oxide particles and oxide film covering the suspended TiB₂ particles. The oxide matrix contains and bonds TiB₂ particles.

### Example 4a

The constituents of the slurry of Example 4 may be changed as shown in the following Table in which each line represents possible combinations of constituents:

| Colloidal or Polymeric Oxides | Suspended Metal Oxides | Suspended Surface-Oxidised Refractory Metal Compounds |
|---|---|---|
| Al₂O₃ | TiO₂, MgO or SiO₂ | TiB₂, SiC, TiC or TiN |
| TiO₂ | Al₂O₃ or MgO | SiC or SiN |
| SiO₂ | Al₂O₃ or MgO | TiB₂, TiC or TiN |

### Example 5

A slurry for producing a coating according to the invention was prepared by suspending 2.5 g particulate Fe₂O₃ (-325 mesh (<42 micrometer)), a refractory hard metal boride consisting of 92.5 g particulate needle-shaped surface-oxidised TiB₂ (-325 mesh (<42 micrometer)) having a TiO₂ surface oxide film, and 2.5 g particulate TiO₂ (-325 mesh (<42 micrometer)) in a colloid consisting of a combination of two grades of colloidal Al₂O₃, namely 28 ml of a first grade of colloidal Al₂O₃ (NYACOL® Al-20, a milky liquid with a colloidal particle size of about 40 to 60 nanometer) and 24 ml of a second grade of colloidal Al₂O₃ (CONDEA® 10/2 Sol, a clear, opalescent liquid with a colloidal particle size of about 10 to 30 nanometer).

This slurry produces upon heat treatment a matrix of mixed oxides consisting of titanium-aluminium mixed oxide and a small amount of iron-titanium-aluminium mixed oxide from the reaction of TiO₂, Fe₂O₃ and Al₂O₃. This matrix contains and bonds the TiB₂ and Fe₂O₃ particles.

### Example 5a

Example 5's slurry composition consists of Fe₂O₃ and a reaction mixture made of the colloid (Al₂O₃), the suspended refractory metal boride (TiB₂) the suspended metal oxide (TiO₂). This Example can be modified by completely or partly substituting Fe₂O₃ with partly oxidised or oxides of copper and/or nickel, and/or by varying the composition of the reaction mixture as in Example 4a.

### Example 6

A further slurry for producing a highly aluminium-wettable start-up layer according to the invention, was prepared as follows. An amount of 60 g of surface oxidised copper particles (-325 mesh(<42 micrometer)) was suspended in a carrier consisting of 13 ml of colloidal Al₂O₃ (7 ml NYACOL® Al-20, a milky liquid with a colloidal particle size of about 40 to 60 nanometer and 6 ml CONDEA® 10/2 Sol, a clear, opalescent liquid with a colloidal particle size of about 10 to 30 nanometer) and 1 ml of PEG (polyethylene glycol) which increases the viscosity of the slurry and enhances its capacity to be applied by painting as well as the adherence and coherence of the final coating.

Upon heat treatment the slurry produces an alumina matrix containing and bonding the oxidised copper particles.

As a modification, oxidised or partly oxidised particles of nickel and/or iron may be used to substitute in part or completely the oxidised copper particles in colloidal alumina (CONDEA 25/5 with a pH > 7).

### Example 7

Three carbon cathodes for use in a drained cell for the production of aluminium were each coated with the slurries of Examples 4, 5 and 6 as follows:

First, an anchorage layer having a thickness of about 100 micrometer was painted onto the exposed surface of the carbon cathode from the slurry of Example 4. The anchorage layer was allowed to dry for 30 minutes.

The anchorage layer was covered with an aluminium-wettable layer obtained by painting 8 layers of the slurry of Example 5. Each applied layer was allowed to dry for 30 minutes before application of the next layer. The final aluminium-wettable layer had a thickness of about 1.8 mm.

The aluminium-wettable layer was then covered with a temporary start-up layer obtained by painting 1 layer of the slurry of Example 6. The start-up layer had a thickness of about 100 to 150 micrometer.

The coating formed by the anchorage layer, the aluminium-wettable layer and the start-up layer on the carbon cathode was allowed to dry for 24 hours.

Two of the three cathodes were then covered with an aluminium sheet having a thickness of about 1.5 cm and heated in an oven at a temperature of about 850-900°C in air.

The first cathode was extracted from the oven after 30 minutes and allowed to cool down to ambient temperature. Examination of a cross-section of the coating showed that aluminium had infiltrated the start-up layer so that the coating was superficially wetted by molten aluminium. No reaction between aluminium and iron oxide had yet taken place.

The second cathode was extracted from the oven after 24 hours and allowed to cool down to ambient temperature. Examination of a cross-section of the coating showed that aluminium had infiltrated the start-up layer and the aluminium-wettable layer. Part of the aluminium had reacted with Fe₂O₃ to form Al₂O₃ and Fe metal. Aluminium infiltration had been stopped on the anchorage layer for lack of oxide reactable with aluminium, which demonstrated that the anchorage layer is an effective barrier layer against penetration of aluminium into the carbon cathode.

The aluminium metal infiltration into the start-up layer and the aluminium-wettable layer enhanced the conductivity of the coating. At ambient temperature, the perpendicular electrical resistance through the coating was less than 1 ohm after infiltration versus more than 500 ohm before infiltration.

The coatings on both cathodes showed a continuous matrix of titanium-aluminium mixed oxides between the anchorage layer and the aluminium-wettable layer which guarantees an excellent adherence between the two layers. In both cases the particles of TiB₂ had not been oxidised by the heat treatment and wettability of the coating by aluminium was very good. The angle of wettability was less than 10 deg.

The third coated carbon cathode was used in an aluminium production drained cell as follows:

The cathode covered with the dried coating according to the invention was covered in the cell with a 1.5 cm thick sheet of aluminium. The cell was heated to a temperature of about 850-900°C by passing an electrical current between the cathode and facing anodes through carbon powder. Other start-up heating procedures could also have been used, e.g. using gas burners to generate heat.

After 30 minutes at 850-900°C, the start-up coating was superficially wetted by molten aluminium which constitutes a barrier against damaging fluoride-based molten electrolyte constituents, such as sodium compounds, and a cryolite based electrolyte was filled into the cell.

The cell was further heated to 960°C at which temperature the cell was operated under an electrolysis current density of 0.8 A/cm² to produce aluminium under conventional steady state conditions.

## Claims

1. An aluminium-wettable protective coating on a substrate for use at elevated temperature in an environment which is oxidising or corrosive or both, and gaseous or molten or both, said coating being applied to protect the substrate from liquid attack or gaseous attack or a combination thereof, said coating comprising particles of at least one of metal oxides and partly oxidised metals in a dried colloidal carrier or a cured organic binder or both, said particles being selected from iron, copper, cobalt, nickel, zinc and manganese in the form of oxides and partly oxidised metals and combinations thereof and being reactable with molten aluminium when exposed thereto to form an alumina matrix containing metal of said particles and aluminium.

2. The coating of claim 1, containing a dried colloidal carrier selected from colloidal alumina, silica, yttria, ceria, thoria, zirconia, magnesia, lithia, monoaluminium phosphate and cerium acetate and combinations thereof.

3. The coating of claim 1 or 2, containing a cured organic binder selected from polyurethane, ethylene glycol, polyethylene glycol, resins, esters or waxes.

4. The coating of any preceding claim, which further contains a particulate refractory hard metal boride.

5. The coating of claim 4, wherein the refractory hard metal boride is selected from titanium diboride and zirconium diboride.

6. The coating of claim 4 or 5, wherein said particles are made of a core of the refractory hard metal boride covered with at least one of metal oxides and partly oxidised metals.

7. The coating of claim 4 or 5, comprising a mixture of said particles of at least one of metal oxides and partly oxidised metals with particles of said refractory hard metal boride.

8. The coating of claim 7, comprising a dried colloidal carrier which consists of dried colloidal metal oxide, the particles of said refractory hard metal boride being covered with mixed oxides of metal derived from said refractory hard metal boride and metal derived from the colloidal metal oxide.

9. The coating of claim 8, which is obtainable from a slurry that comprises metal oxide particles that combine upon heat treatment with dried colloidal metal oxide to form mixed oxides which are miscible with said mixed oxides covering the particles of said refractory hard metal boride.

10. The coating of any preceding claim, further comprising carbon powder.

11. The coating of any preceding claim, which has a thickness of 0.1 to 5 mm.

12. The coating of claim 11, which has a thickness of 0.3 to 3 mm.

13. The coating of any preceding claim, which is bonded to the substrate through a refractory boride anchorage layer which is inert and impervious to molten aluminium.

14. The coating of any preceding claim, wherein one or more long-lasting aluminium-wettable layers comprising a mixture of boride particles and said particles of at least one of metal oxides and partly oxidised metals reactable with molten aluminium are covered with one or more highly aluminium-wettable layers made of said particles of at least one of metal oxides and partly oxidised metals reactable with molten aluminium in said colloidal carrier or organic binder or both.

15. The coating of any preceding claim, wherein the substrate is made of carbon material.

16. The coating of any preceding claim, which is an aluminium wetted coating comprising an aluminium-wetted layer made of an alumina matrix containing aluminium and metal of said particles of at least one of reactable metal oxides and partly oxidised metals, the aluminium-wetted layer resulting from the reaction of the particles of said at least one of metal oxides and partly oxidised metals with molten aluminium exposed thereto.

17. A method of forming an aluminium-wettable protective coating on a substrate as defined in any one of claims 1 to 15, the method comprising applying onto the substrate one or more layers of said reactable particles of at least one of metal oxides and partly oxidised metals in: a colloidal carrier and drying, or an organic binder and curing, or both.

18. A method of forming an aluminium-wetted protective coating on a substrate comprising exposing the coating as defined in any one of claims 1 to 15 to molten aluminium so that said particles of at least one of metal oxides and partly oxidised metals react with aluminium to form an alumina matrix containing metal of said particles and aluminium.

19. An apparatus for the production, purification or recycling of a metal in a molten state comprising at least one component which comprises a substrate coated with an aluminium-wettable protective coating as defined in any one of claims 1 to 16, and which during use is exposed to an environment at elevated temperature which is oxidising or corrosive or both, and gaseous or molten or both and is protected from liquid attack or gaseous attack or both by said aluminium-wettable protective coating.

20. The apparatus of claim 19, which is an aluminium electrowinning cell, comprising at least one component which is part of a cell bottom coated with said aluminium-wettable protective coating protecting the cell bottom component from molten aluminium or molten electrolyte or both; a cathode having an aluminium-wettable surface formed by said aluminium-wettable protective coating which protects the cathode from molten aluminium or molten electrolyte or both; an anode having one or more electrochemically inactive surfaces coated with said aluminium-wettable protective coating which protects the inactive surface from at least one of molten electrolyte and anodically produced gas; or a cell sidewall coated with said aluminium-wettable protective coating which protects the sidewall from at least one of molten electrolyte, molten aluminium and anodically produced gas.

21. The apparatus of claim 20, wherein said component is a cathode which has an aluminium-wettable drained surface.

22. The apparatus of claim 19, which is an arc furnace for the recycling of steel, said component being an arc-electrode or an arc-electrode holder coated with said aluminium-wettable protective coating which protects it from at least one of oxidising gas and molten steel.

23. The apparatus of claim 19, which is an apparatus for the purification of a molten metal by the injection of a purifying fluid into the molten metal to remove impurities towards the surface thereof, said component being a rotatable stirrer or a vessel for containing molten metal to be purified and which is protected from at least one of the molten metal to be purified, the purifying fluid and impurities of the molten metal by said aluminium-wettable protective coating.

24. The apparatus of claim 23, which is an apparatus for the purification of molten aluminium, molten magnesium, cast iron or molten steel.

25. A method of producing, purifying or recycling a metal in an apparatus as defined in any one of claims 20 to 24 and which comprises at least one component coated with said aluminium-wettable protective coating, the method comprising exposing said coated component to an environment at elevated temperature which is oxidising or corrosive or both, and gaseous or molten or both.

## Patentansprüche

1. Aluminium-benetzbare Schutzschicht auf einem Substrat zur Verwendung bei erhöhter Temperatur in einer Umgebung, die oxidierend und/oder korrodierend sowie gasförmig und/oder geschmolzen ist, wobei die Schicht aufgebracht ist, um das Substrat gegen Angriffe von Flüssigkeit oder von Gasen oder von einer Kombination davon zu schützen, wobei die Schicht Partikel aus zumindest einem von Metalloxiden und teilweise oxidierten Metallen in einem getrockneten kolloidalen Träger und/oder einem gehärteten organischen Bindemittel enthält, wobei die Partikel aus Eisen, Kupfer, Kobalt, Nickel, Zink und Mangan in der Form von Oxiden und teilweise oxidierten Metallen und Kombinationen daraus ausgewählt sind und mit geschmolzenem Aluminium reagieren können, wenn sie diesem ausgesetzt sind, um eine Aluminiumoxid-Matrix zu bilden, die Metall dieser Partikel und Aluminium enthält.

2. Schicht nach Anspruch 1, mit einem getrockneten kolloidalen Träger, der aus kolloidalem Aluminiumoxid, Siliciumoxid, Yttriumoxid, Ceroxid,. Thoriumoxid, Zirkoniumoxid, Magnesiumoxid, Lithiumoxid, Monoaluminiumphosphat und Ceracetat sowie Kombinationen daraus ausgewählt ist.

3. Schicht nach Anspruch 1 oder 2, mit einem gehärteten organischen Bindemittel, das aus Polyurethan, Ethylenglykol, Polyethylenglykol, Kunstharzen, Estern oder Wachsen ausgewählt ist.

4. Schicht nach einem der vorhergehenden Ansprüche, die außerdem ein partikelförmiges hitzebeständiges Hartmetallborid enthält.

5. Schicht nach Anspruch 4, bei der das hitzebeständige Hartmetallborid aus Titandiborid und Zirkoniumdiborid ausgewählt ist.

6. Schicht nach Anspruch 4 oder 5, bei der die Partikel aus einem Kern aus hitzebeständigem Hartmetallborid hergestellt sind, der mit zumindest einem von Metalloxiden und teilweise oxidierten Metallen überdeckt ist.

7. Schicht nach Anspruch 4 oder 5, mit einer Mischung der Partikel aus zumindest einem von Metalloxiden und teilweise oxidierten Metallen mit Partikeln aus dem hitzebeständigen Hartmetallborid.

8. Schicht nach Anspruch 7, mit einem getrockneten kolloidalen Träger, der ein getrocknetes kolloidales Metalloxid enthält, wobei die Partikel des hitzebeständigen Hartmetallborids mit gemischten Oxiden aus Metall überdeckt sind, die aus dem hitzebeständigen Hartmetallborid und Metall abgeleitet sind, das aus dem kolloidalen Metalloxid abgeleitet ist.

9. Schicht nach Anspruch 8, die aus einem Schlamm erhalten werden kann, der Metalloxid-Partikel enthält, die bei Hitzebehandlung mit getrocknetem kolloidalem Metalloxid kombinieren, um gemischte Oxide zu bilden, die mit den gemischten Oxiden mischbar sind, die die Partikel des hitzebeständigen Hartmetallborids überdecken.

10. Schicht nach einem der vorhergehenden Ansprüche, außerdem mit Kohlenstoffpulver.

11. Schicht nach einem der vorhergehenden Ansprüche, die eine Dicke von 0,1 bis 5 mm hat.

12. Schicht nach Anspruch 11, die eine Dicke von 0,3 bis 3 mm hat.

13. Schicht nach einem der vorhergehenden Ansprüche, die mit dem Substrat über eine hitzebeständige Borid-Verankerungs-Lage verbunden ist, die inert und für geschmolzenes Aluminium undurchlässig ist.

14. Schicht nach einem der vorhergehenden Ansprüche, bei der eine oder mehrere langlebige, Aluminium-benetzbare Lagen, die eine Mischung aus Borid-Partikeln und den Partikeln aus zumindest von einem von Metalloxiden und teilweise oxidierten Metallen enthalten, die mit geschmolzenem Aluminium reagieren können, mit einer oder mehreren Hoch-Aluminiumbenetzbaren Lagen überdeckt sind, die aus den Partikeln aus zumindest einem von Metalloxiden und teilweise oxidierten Metallen, die mit geschmolzenem Aluminium reagieren können, in dem kolloidalen Träger und/oder dem organischen Bindemittel gebildet sind.

15. Schicht nach einem der vorhergehenden Ansprüche, bei der das Substrat aus Kohlenstoffmaterial hergestellt ist.

16. Schicht nach einem der vorhergehenden Ansprüche, die eine Aluminium-benetzte Schicht ist, die eine Aluminium-benetzte Lage enthält, die aus einer Aluminium-Matrix hergestellt ist, die Aluminium und Metall der Partikel aus zumindest einem von hitzebeständigen Metalloxiden und teilweise oxidierten Metallen enthält, wobei die Aluminium-benetzte Lage aus der Reaktion der Partikel aus zumindest einem von Metalloxiden und teilweise oxidierten Metallen mit geschmolzenem Aluminium resultiert, das diesen ausgesetzt ist.

17. Verfahren zum Herstellen einer Aluminium-benetzbaren Schutzschicht auf einem Substrat nach einem der Ansprüche 1 bis 15, wobei das Verfahren das Aufbringen von einer oder von mehreren Lagen der reaktionsfähigen Partikel aus zumindest einem von Metalloxiden und teilweise oxidierten Metallen in einem kolloidalen Träger und Trocknen und/oder einem organischen Bindemittel und Aushärten auf das Substrat umfasst.

18. Verfahren zum Herstellen einer Aluminium-benetzbaren Schutzschicht auf einem Substrat, bei dem die Schicht, die in einem der Ansprüche 1 bis 15 definiert ist, geschmolzenem Aluminium ausgesetzt wird, so dass die Partikel aus zumindest einem von Metalloxiden und von teilweise oxidierten Metallen mit Aluminium reagieren, um eine Aluminiumoxid-Matrix zu bilden, die Metall dieser Partikel und Aluminium enthält.

19. Vorrichtung für die Produktion, Reinigung oder die Wiedergewinnung eines Metalls in einem geschmolzenen Zustand, mit zumindest einer Komponente, die ein Substrat aufweist, das mit einer Aluminium-benetzbaren Schutzschicht beschichtet ist, wie sie in einem der Ansprüche 1 bis 16 definiert ist, und das während der Verwendung einer Umgebung mit erhöhter Temperatur ausgesetzt ist, die oxidierend und/oder korrodierend sowie gasförmig und/oder geschmolzen ist, und das durch die Aluminium-benetzbare Schutzschicht gegen Angriffe von Flüssigkeit und/oder von Gasen geschützt ist.

20. Vorrichtung nach Anspruch 19, die eine Zelle zur elektrolytischen Gewinnung von Aluminium ist, mit zumindest einer Komponente, die Teil von einem Zellen-Boden ist, die mit der Aluminium-benetzbaren Schutzschicht beschichtet ist, die die Zellen-Boden-Komponente gegen geschmolzenes Aluminium und/oder geschmolzenen Elektrolyten schützt; einer Kathode mit einer Aluminium-benetzbaren Fläche, die durch die Aluminium-benetzbare Schutzschicht gebildet ist, die die Kathode gegen geschmolzenes Aluminium und/oder geschmolzenen Elektrolyten schützt; und einer Anode mit einer oder mehreren elektrochemisch inaktiven Flächen, die mit der Aluminium-benetzbaren Schutzschicht beschichtet sind, die die inaktive Fläche gegen zumindest eines von geschmolzenem Elektrolyten und anodisch erzeugtem Gas schützt; oder einer Zellen-Seitenwand, die mit der Aluminium-benetzbaren Schutzschicht beschichtet ist, die die Seitenwand gegen zumindest eines von geschmolzenem Elektrolyten, geschmolzenem Aluminium und anodisch erzeugtem Gas schützt.

21. Vorrichtung nach Anspruch 20, bei der die Komponente eine Kathode ist, die eine Aluminium-benetzbare, drainierte Fläche hat.

22. Vorrichtung nach Anspruch 19, die ein Lichtbogenofen für die Wiedergewinnung von Stahl ist, wobei die Komponente eine Lichtbogen-Elektrode oder eine Lichtbogen-Halterung ist, die mit der Aluminium-benetzbaren Schutzschicht beschichtet ist, die sie gegen zumindest eines von oxidierendem Gas und geschmolzenem Stahl schützt.

23. Vorrichtung nach Anspruch 19, die eine Vorrichtung für die Reinigung von einem geschmolzenen Metall durch das Einleiten von einem Reinigungs-Fluid in das geschmolzene Metall ist, um Verunreinigungen in Richtung der Oberfläche davon zu entfernen, wobei die Komponente ein drehbares Rührwerk oder ein Kessel zur Aufnahme von zu reinigendem, geschmolzenem Metall ist, die gegen zumindest eines von zu reinigendem, geschmolzenem Metall, Reinigungsfluid und Verunreinigungen des geschmolzenen Metalls durch die Aluminium-benetzbare Schutzschicht geschützt ist.

24. Vorrichtung nach Anspruch 23, die eine Vorrichtung für die Reinigung von geschmolzenem Aluminium, geschmolzenem Magnesium, Gusseisen oder geschmolzenem Stahl ist.

25. Verfahren zur Produktion, Reinigung oder Wiedergewinnung von einem Metall in einer Vorrichtung nach einem der Ansprüche 20 bis 24, mit zumindest einer Komponente, die mit der Aluminium-benetzbaren Schutzschicht beschichtet ist, wobei das Verfahren umfasst: Aussetzen der beschichteten Komponente einer Umgebung mit erhöhter Temperatur, die oxidierend und/oder korrodierend sowie gasförmig und/oder geschmolzen ist.

## Revendications

1. Revêtement de protection mouillable par l'aluminium sur un substrat pour une utilisation à température élevée dans un environnement qui est oxydant ou corrosif ou les deux, et gazeux ou en fusion ou les deux, ledit revêtement étant appliqué pour protéger le substrat d'attaque liquide ou d'attaque gazeuse ou une combinaison de celles-ci, ledit revêtement comprenant des particules d'au moins l'un d'oxydes métalliques et de métaux oxydés partiellement dans un support colloïdal séché ou un liant organique polymérisé ou les deux, lesdites particules étant choisies à partir de fer, cuivre, cobalt, nickel, zinc et manganèse sous la forme d'oxydes et de métaux oxydés partiellement et de combinaisons de ceux-ci et pouvant réagir avec de l'aluminium fondu quand elles sont exposées à celui-ci pour former une matrice d'alumine contenant le métal desdites particules et l'aluminium.

2. Revêtement selon la revendication 1, contenant un support colloïdal séché choisi à partir d'alumine, silice, yttria, oxyde de cérium, thorine, zircone, magnésie, lithine, phosphate de monoaluminium et acétate de cérium colloïdaux et de combinaisons de ceux-ci.

3. Revêtement selon la revendication 1 ou 2, contenant un liant organique polymérisé choisi à partir de polyuréthane, éthylèneglycol, polyéthylèneglycol, résines, esters ou cires.

4. Revêtement selon une quelconque revendication précédente, qui contient de plus un borure métallique dur réfractaire particulaire.

5. Revêtement selon la revendication 4, dans lequel le borure métallique réfractaire dur est choisi à partir de diborure de titane et de diborure de zirconium.

6. Revêtement selon la revendication 4 ou 5, dans lequel lesdites particules sont constituées d'un noyau du borure métallique dur réfractaire recouvert d'au moins l'un d'oxydes métalliques et de métaux oxydés partiellement.

7. Revêtement selon la revendication 4 ou 5, comprenant un mélange desdites particules d'au moins l'un d'oxydes métalliques et de métaux oxydés partiellement avec des particules dudit borure métallique réfractaire dur.

8. Revêtement selon la revendication 7, comprenant un support colloïdal séché qui se compose d'un oxyde métallique colloïdal séché, les particules dudit borure métallique réfractaire dur étant recouvertes d'oxydes mélangés de métal dérivés dudit borure métallique réfractaire dur et de métal dérivé de l'oxyde métallique colloïdal.

9. Revêtement selon la revendication 8, qui peut être obtenu à partir d'un coulis qui comprend des particules d'oxyde métallique qui se combinent lors de traitement thermique avec un oxyde métallique colloïdal séché pour former des oxydes mélangés qui sont miscibles avec lesdits oxydes mélangés recouvrant les particules dudit borure métallique réfractaire dur.

10. Revêtement selon une quelconque revendication précédente, comprenant de plus de la poudre de carbone.

11. Revêtement selon une quelconque revendication précédente, qui a une épaisseur de 0,1 à 5 mm.

12. Revêtement selon la revendication 11, qui a une épaisseur de 0,3 à 3 mm.

13. Revêtement selon une quelconque revendication précédente, qui est lié au substrat par une couche d'ancrage de borure réfractaire qui est inerte et imperméable à l'aluminium fondu.

14. Revêtement selon une quelconque revendication précédente, dans lequel une ou plusieurs couches mouillables par l'aluminium, durables comprenant un mélange de particules de borure et desdites particules d'au moins l'un d'oxydes métalliques et de métaux oxydés partiellement pouvant réagir avec l'aluminium fondu, sont recouvertes avec une ou plusieurs couches fortement mouillables par l'aluminium faites desdites particules d'au moins l'un d'oxydes métalliques et de métaux oxydés partieliement pouvant réagir avec l'aluminium fondu dans ledit support colloïdal ou dans ledit liant organique ou les deux.

15. Revêtement selon une quelconque revendication précédente, dans lequel le substrat est réalisé en matière carbonée.

16. Revêtement selon une quelconque revendication précédente, qui est un revêtement mouillé par l'aluminium comprenant une couche mouillée par l'aluminium faite d'une matrice d'alumine contenant l'aluminium et le métal desdites particules d'au moins l'un des oxydes métalliques et des métaux oxydés partiellement pouvant réagir, la couche mouillée par l'aluminium résultant de la réaction des particules d'au moins l'un desdits oxydes métalliques et métaux partiellement oxydés avec l'aluminium fondu exposé à celles-ci.

17. Procédé pour former un revêtement protecteur mouillable par l'aluminium sur un substrat comme défini dans l'une quelconque des revendications 1 à 15, le procédé consistant à appliquer sur le substrat une ou plusieurs couches desdites particules pouvant réagir d'au moins l'un d'oxydes métalliques et de métaux oxydés partiellement dans : un support colloïdal et à sécher, ou un liant organique et à polymériser ou les deux.

18. Procédé pour former un revêtement protecteur mouillé par l'aluminium sur un substrat consistant à exposer le revêtement, comme défini dans l'une quelconque des revendications 1 à 15, à l'aluminium fondu de sorte que lesdites particules d'au moins l'un d'oxydes métalliques et de métaux oxydés partiellement réagissent avec l'aluminium pour former une matrice d'alumine contenant le métal desdites particules et l'aluminium.

19. Appareil pour la production, la purification ou le recyclage d'un métal dans un état fondu comprenant au moins un composant qui comprend un substrat revêtu d'un revêtement protecteur mouillable par l'aluminium comme défini dans Tune quelconque des revendications 1 à 16, et qui, pendant l'utilisation, est exposé à un environnement à température élevée qui est oxydant ou corrosif ou les deux, et gazeux ou en fusion ou les deux, et est protégé d'attaque liquide ou d'attaque gazeuse ou des deux par ledit revêtement protecteur mouillable par l'aluminium.

20. Appareil selon la revendication 19, qui est une cuve d'électro-obtention d'aluminium, comprenant au moins un composant qui est une partie d'un fond de cuve revêtu dudit revêtement protecteur mouillable par l'aluminium protégeant le composant de fond de cuve de l'aluminium fondu ou de l'électrolyte fondu ou des deux ; une cathode ayant une surface mouillable par l'aluminium formée par ledit revêtement protecteur mouillable par l'aluminium qui protège la cathode de l'aluminium fondu ou de l'électrolyte fondu ou des deux ; une anode ayant une ou plusieurs surfaces électrochimiquement inactives revêtues dudit revêtement protecteur mouillable par l'aluminium qui protège la surface inactive d'au moins un de l'électrolyte fondu et du gaz produit de façon anodique ; ou une paroi latérale de cuve revêtue dudit revêtement protecteur mouillable par l'aluminium qui protège la paroi latérale d'au moins un de l'électrolyte fondu, de l'aluminium fondu et du gaz produit de façon anodique.

21. Appareil selon la revendication 20, dans lequel ledit composant est une cathode qui présente une surface drainée mouillable par l'aluminium.

22. Appareil selon la revendication 19, qui est un four à arc pour le recyclage d'acier, ledit composant étant une électrode à arc ou un porte-électrode à arc revêtu dudit revêtement protecteur mouillable par l'aluminium qui le protège d'au moins un du gaz oxydant et de l'acier fondu.

23. Appareil selon la revendication 19, qui est un appareil pour la purification d'un métal fondu par l'injection d'un fluide d'affinage dans le métal fondu pour éliminer les impuretés vers la surface de celui-ci, ledit composant étant un agitateur pouvant tourner ou un récipient pour contenir le métal fondu à purifier et qui est protégé d'au moins un du métal fondu à purifier, du fluide d'affinage et des impuretés du métal fondu par ledit revêtement protecteur mouillable par l'aluminium.

24. Appareil selon la revendication 23, qui est un appareil pour la purification d'aluminium fondu, de magnésium fondu, de fonte ou d'acier fondu.

25. Procédé pour produire, purifier ou recycler un métal dans un appareil comme défini dans l'une quelconque des revendications 20 à 24 et qui comprend au moins un composant revêtu dudit revêtement protecteur mouillable par l'aluminium, le procédé consistant à exposer ledit composant revêtu à un environnement à température élevée qui est oxydant ou corrosif ou les deux, et gazeux ou en fusion ou les deux.
